# EUROPÄISCHE PATENTSCHRIFT

(11) **EP 1 195 612 B1**
(45) Veröffentlichungstag und Bekanntmachung des Hinweises auf die Patenterteilung: **23.04.2008**
(21) Anmeldenummer: 01122074.6
(22) Anmeldetag: 14.09.2001
(51) Int. Cl.: G01P 3/481, B60K 25/00

(54) **Erkennung eines Fahrzeug-Nebenantriebs**
Detection of an auxiliary drive in a vehicle
Détection d'entraînement des auxiliaires de véhicule

(30) Priorität: 07.10.2000 DE 10049704
(43) Veröffentlichungstag der Anmeldung: 10.04.2002
(73) Patentinhaber: DEERE & COMPANY, Moline, Illinois 61265-8098 (US)
(72) Erfinder: Tarasinski, Nicolai, Dr., 67227 Frankenthal (DE)
(74) Vertreter: Magin, Ludwig Bernhard

(56) Entgegenhaltungen:
- EP-A- 0 980 001
- US-A- 6 073 428
- PATENT ABSTRACTS OF JAPAN vol. 012, no. 262 (M-721), 22. Juli 1988 (1988-07-22) -& JP 63 043832 A (SEIREI IND CO LTD), 24. Februar 1988 (1988-02-24)

## Beschreibung

Die Erfindung betrifft eine Mess- und Auswerteeinrichtung zur Erfassung und Auswertung der Drehbewegung des Nebenantriebs eines Arbeitsfahrzeugs mit einem Nebenantriebssensor zur Erfassung der Nebenantriebsdrehbewegung. Sie betrifft des Weiteren ein selbstfahrendes Arbeitsfahrzeug mit einem Antriebsmotor, einem Getriebe für den Fahrantrieb und mindestens einem Nebenantrieb, an den wahlweise ein Arbeitsgerät oder -aggregat anschließbar ist, wobei die Leistung des Antriebsmotors zu einem ersten Teil auf den Fahrantrieb und zu einem zweiten Teil auf die Nebenantriebe verzweigt wird und wobei wenigstens ein Nebenantriebssensor, z. B. ein Drehgeschwindigkeitssensor zur Messung und Überwachung der Drehbewegung des Nebenantriebs vorgesehen ist.

Bei selbstfahrenden Arbeitsfahrzeugen mit Zapfwelle, wie beispielsweise Ackerschleppern, dürfen weder der das Fahrzeug antreibende Antriebsstrang noch der Zapfwellenantrieb durch die abgegebene Motorleistung überlastet werden. Daher wird die Motorleistung so begrenzt, dass weder für einen reinen Fahrantrieb noch für einen reinen Zapfwellenantrieb eine Überlastung des Antriebsstrangs oder des Zapfwellenantriebs auftreten kann. Wenn die Motorleistung jedoch gleichzeitig für den Fahrzeugantrieb als auch für den Zapfwellenantrieb verwendet wird, so dass ein Teil der Leistung an die Räder und ein anderer Teil der Leistung an die Zapfwelle übertragen wird, kann die Motorleistung weiter gesteigert werden (power boost), ohne den Antriebsstrang oder den Zapfwellenantrieb zu überlasten.

Die EP-A-0 901 928 schlägt zu diesem Zweck vor, Messeinrichtungen zur Ermittlung mindestens einer leistungsbegrenzenden Größe in den Nebenantrieben und in dem Fahrantrieb vorzusehen und anhand der Auswertung der ermittelten Größen die Ausgangsleistung des Antriebsmotors an die jeweiligen Leistungsgrenzen anzupassen. Als leistungsbegrenzende Größe wird das Drehmoment eines Nebenantriebes, ein Hydraulikdruck oder eine Stellhebelauslenkung erfasst. Die Messung dieser Größen erfordert jedoch zusätzliche Sensoren und einen erhöhten Messaufwand.

Es ist wünschenswert, automatisch und auf einfache Weise feststellen zu können, ob ein Nebenantrieb mit einem Arbeitsaggregat verbunden und aktiv ist. Mit einer solchen Information lassen sich beispielsweise die Leistung des Antriebsmotors entsprechend steuern oder andere Größen einstellen.

Die der Erfindung zugrunde liegende Aufgabe wird darin gesehen, eine Mess- und Auswerteeinrichtung bzw. ein Arbeitsfahrzeug der eingangs genannten Art anzugeben, durch die die vorgenannten Probleme überwunden werden. Insbesondere soll es auf einfache Weise möglich sein, automatisch festzustellen, ob ein Arbeitsaggregat oder -gerät an einen Nebenantrieb angeschlossen ist, ohne dass zusätzliche Messsignale erforderlich sind.

Die Aufgabe wird erfindungsgemäß durch die Lehre eines der Patentansprüche 1 oder 8 gelöst. Weitere vorteilhafte Ausgestaltungen und Weiterbildungen der Erfindung gehen aus den abhängigen Ansprüchen hervor.

Die erfindungsgemäße Mess- und Auswerteeinrichtung enthält einen Nebenantriebssensor zur Erfassung der Drehbewegung eines Nebenantriebs und eine Auswerteeinrichtung, welche die Intensität der zweiten Harmonischen des Sensorsignals ermittelt und bei Überschreiten und/oder Unterschreiten eines vorgebbaren Schwellwertes entsprechende Steuersignale ausgibt.

Es hat sich herausgestellt, dass ein Fahrzeugnebenantrieb, insbesondere eine Zapfwelle, Torsionsschwingungen mit charakteristischen Oberschwingungen ausführt, sofern an den Nebenantrieb ein angetriebenes Anbaugerät angeschlossen ist und betrieben wird. Eine besonders hervortretende Frequenz dieser Torsionsschwingungen ist doppelt so hoch wie es der Grunddrehzahl des Nebenantriebs entspricht. Wenn der Nebenantrieb ohne ein Anbaugerät läuft, tritt diese Torsionsschwingung zweiter Ordnung nicht oder nur sehr schwach auf. Diese Erkenntnis macht sich die Erfindung zu Nutze, indem sie vorschlägt, die Oberschwingung zweiter Ordnung (zweite Harmonische) des Nebenantriebs zu überwachen und beschreibt somit ein einfaches Verfahren, das feststellt, ob ein Anbaugerät an dem Fahrzeugnebenantrieb angeschlossen ist oder nicht. Diese Information lässt sich für verschiedene Zwecke verwenden. Beispielsweise kann eine Warnleuchte angesteuert werden, die der Bedienungsperson anzeigt, ob ein Zapfwellengerät mitläuft.

Wenn ein Anbaugerät an den Fahrzeugnebenantrieb angeschlossen ist und betrieben wird, nimmt der Nebenantrieb Leistung auf. Wegen der unvermeidbaren Reibungsverluste in Lagern und dergleichen wird auch dann, wenn das Anbaugerät keine Arbeit ausführt, sondern lediglich mitläuft, wenigstens eine Leerlaufverlustleistung durch den Nebenantrieb aufgenommen. Diese Leerlaufverlustleistung kann beispielsweise 10% der Antriebsmotorleistung betragen.

Die Information, ob ein Anbaugerät an den Nebenantrieb angeschlossen ist oder nicht, wird in besonders vorteilhafter Weise verwendet, um die maximal zulässige Antriebsmotorleistung zu steigern (power boost), sofern ein Anbaugerät angeschlossen ist. Der Antriebsmotor wird normalerweise mit einer maximalen Leistung betrieben, durch die bei reinem Fahrantrieb der Antriebsstrang nicht überlastet wird. Wird auf erfindungsgemäße Weise festgestellt, dass ein Anbaugerät angeschlossen ist, so wird die maximale Motorleistung automatisch um beispielsweise 10% gesteigert, indem die Einspritzmenge der Einspritzpumpe entsprechend angehoben wird.

Der Unterschied zu Systemen des Standes der Technik besteht darin, dass lediglich die Anwesenheit eines Arbeitsgerätes oder -aggregats ermittelt wird, und zwar unabhängig von der tatsächlichen Leistungsaufnahme des Arbeitsgeräts. Hierfür sind keine Drucksensoren, Kraftsensoren oder Drehmomentsensoren erforderlich. Vielmehr kann das Signal des meistens ohnehin vorhandenen Nebenantriebsdrehzahlsensors für die Auswertung herangezogen werden. Damit erfordert die vorliegende Erfindung weniger Sensoren als andere Verfahren. Es ist keine Sensor-Kalibrierung erforderlich. Vorhandene Antriebsstränge oder Nebenantriebe können auf einfache Weise nachgerüstet werden, ohne dass umfangreiche Änderungen vorgenommen werden müssen. Hierbei ist es lediglich erforderlich, das Signal eines bereits vorhandenen Nebenantriebssensors entsprechend der Erfindung auszuwerten, was lediglich eine Ergänzung des in der Auswerteeinrichtung durchgeführten Algorithmus durch eine relativ einfache Programmschleife erfordert. Der Algorithmus kann in die elektronische Motorsteuerung integriert sein und arbeitet sehr leistungsfähig.

Um eine Überlastung des Nebenantriebs für den Fall zu vermeiden, dass das Fahrzeug nicht fährt und der Antriebsstrang keine Leistung aufnimmt, schlägt eine bevorzugte Weiterbildung der Erfindung vor, dass Mittel zur Überwachung der Antriebsstrangdrehzahl oder der Fahrzeuggeschwindigkeit vorgesehen sind. Die Steuerung erfolgt nun so, dass die Motorleistung nur dann über eine normale Maximalleistung hinaus erhöht werden kann (power boost), wenn eine Mindestdrehzahl des Antriebsstrangs oder eine Mindestfahrzeuggeschwindigkeit überschritten wird.

Vorzugsweise sind Mittel zur Erfassung der Drehgeschwindigkeit des Nebenantriebs oder der Zeitdauern (Periode) zwischen aufeinanderfolgenden Abtastimpulsen vorgesehen. Aus den Drehgeschwindigkeitsänderungen oder aus den Änderungen der Zeitdauern werden die Amplitude oder Intensitäten derjenigen Schwankungsdrehzahl berechnet, welche die doppelte Frequenz (zweite Harmonische) wie die Nebenantriebsgrunddrehzahl aufweist.

Die Erfassung der Intensität der zweiten Oberschwingung erfolgt in vorteilhafter Weise durch ein Schmalbandfilter, welches aus dem Sensorsignal die zweite Harmonische herausfiltert.

Besonders vorteilhaft ist es jedoch, das Sensorsignal mit einer elektronischen Datenverarbeitung auszuwerten. Dies erfordert keine speziell angepassten elektrischen Schaltkreise sondern lediglich die Programmierung einer Auswerteeinrichtung. Zur Ermittlung der Größe der zweiten Harmonischen wird zweckmäßiger Weise eine Fourier-Analyse durchgeführt.

Vorzugsweise wird die ermittelte Größe der zweiten Harmonischen mit einem vorgebbaren Schwellwert verglichen. Bei Überschreiten des Schwellwerts wird ein Signal ausgegeben, um anzuzeigen, dass ein Arbeitsgerät oder -aggregat an den Nebenantrieb angeschlossen ist. Die Anzeige kann optisch oder akustisch erfolgen und u. a. der Arbeitssicherheit dienen.

Das erfindungsgemäße Arbeitsfahrzeug enthält einen Antriebsmotor, ein Getriebe für den Fahrantrieb und mindestens einen Nebenantrieb, an den wahlweise ein Arbeitsgerät oder - aggregat anschließbar ist. Die Leistung des Antriebsmotors wird zu einem ersten Teil auf den Fahrantrieb und zu einem zweiten Teil auf die Nebenantriebe verzweigt. Durch wenigstens einen Nebenantriebssensor, beispielsweise einen Drehgeschwindigkeitssensor, wird die Drehbewegung des Nebenantriebs überwacht. Es ist eine Auswerteeinrichtung mit den bereits beschriebenen Merkmalen vorgesehen, die die zweite Harmonische der Sensorsignale ermittelt und feststellt, ob diese einen vorgebbaren Schwellwert überschreitet.

Vorzugsweise enthält der Nebenantrieb eine Zapfwelle, an die ein Arbeitsgerät anschließbar ist. Das Arbeitsgerät ist über ein Kreuzgelenk an die Zapfwelle anschließbar. Für diese Anordnung ist die Erfindung besonders geeignet, denn es hat sich herausgestellt, dass die zweite Harmonische besonders ausgeprägt ist, wenn an der Zapfwelle ein etwas abgewinkeltes Kreuzgelenk angeschlossen ist.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: die schematische Darstellung eines Fahrzeugantriebs mit Zapfwellenantrieb und
- Fig. 2: das Flussdiagramm eines erfindungsgemäßen Steueralgorithmus.

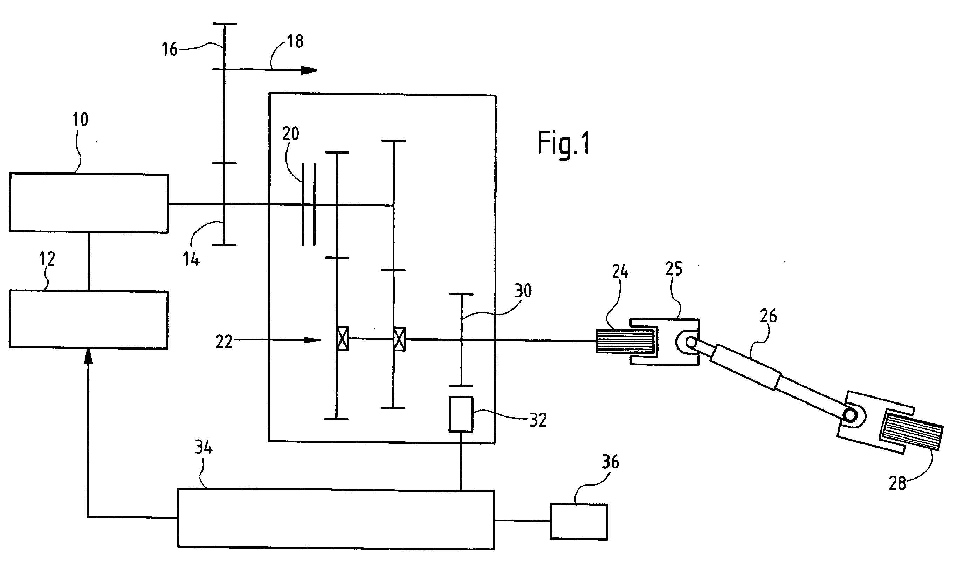

Aus Fig. 1 geht ein Verbrennungsmotor 10 mit einer Motorsteuerung 12 für ein Arbeitsfahrzeug, beispielsweise für einen Ackerschlepper, hervor. Die Motorsteuerung 12 steuert die Kraftstoffeinspritzmenge für die nicht näher dargestellte Einspritzpumpe des Motors 10. Der Verbrennungsmotor 10 treibt über eine Räderkette 14, 16 und einen üblichen, nicht näher dargestellten Fahrantriebsstrang 18 mit Getriebekomponenten, Differential und Achsantriebsgetrieben die nicht dargestellten Fahrzeugräder an.

Der Verbrennungsmotor 10 treibt des weiteren über eine Zapfwellenkupplung 20 und eine Schaltstufe 22 eine übliche, als Nebenantrieb dienende Zapfwelle 24 an. An die Zapfwelle 24 ist über ein Kreuzgelenk 25 ein Ende einer Gelenkwelle 26 angeschlossen, dessen anderes Ende mit der Zapfwelle 28 eines nicht näher gezeigten Zapfwellengeräts verbunden ist. Durch Betätigung der Zapfwellenkupplung 20 lässt sich die Zapfwelle 24 zu- und abschalten. Die Schaltstufen 22 ermöglichen die Umschaltung zwischen zwei Zapfwellendrehzahlen.

Mit der Zapfwelle 24 ist ein Geberrad 30 verbunden, dessen äußerer Umfang eine Verzahnung trägt. Gegenüberliegend zur Verzahnung ist ein magnetischer Drehzahlgeber 32 angeordnet, dessen Signale durch eine Steuerung 34 ausgewertet werden.

Jedes Mal, wenn sich ein Zahn der Verzahnung an dem Drehzahlgeber 32 vorbei bewegt, gibt der Drehzahlgeber 32 einen elektrischen Abtastimpuls an die Steuerung 34 aus.

Aus dem zeitlichen Abstand der aufeinanderfolgenden Abtastimpulse berechnet die Steuerung 34 die Drehgeschwindigkeit bzw. die Periodendauer des Geberzahnrades 30 und der Zapfwelle 24. Aus den ermittelten Werten bestimmt die Steuerung 34 die Größe der Drehgeschwindigkeitsänderung oder die Änderung der Periodendauer (Torsionsschwingung), welche die doppelte Frequenz wie die Grunddrehzahl der Zapfwelle hat. Dies kann z. B. durch Verwendung eines Schmalbandfilters, durch Anwendung der harmonischen Analyse oder durch eine Fourier-Transformation erfolgen. Die so ermittelte Größe der zweiten Harmonischen wird mit einem vorgebbaren Schwell- oder Grenzwert verglichen. Wenn die Größe den Schwellwert übersteigt, besagt dies, dass ein Anbaugerät an die Zapfwelle angeschlossen ist, andernfalls ist kein Anbaugerät angeschlossen. Wenn durch die Steuerung 34 ein Anbaugerät festgestellt wird, gibt sie ein Signal an die Motorsteuerung 12 aus, um eine erhöhte maximale Motorleistung zuzulassen.

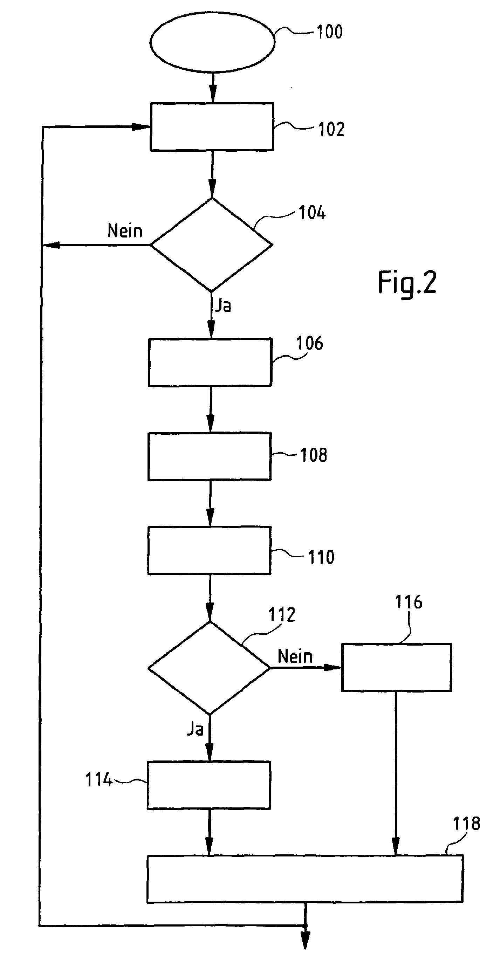

Die Steuerung enthält einen programmierbaren elektronischen Rechner, der einen Algorithmus ausführt. Dieser wird anhand des in Fig. 2 dargestellten Flussdiagramms beschrieben.

Mit Schritt 100 wird der Algorithmus gestartet. Der Startbefehl kann beispielsweise durch Betätigung des Zündschlüssels, durch Betätigung eines gesonderten Schalters oder automatisch beim Einrücken der Zapfwellenkupplung 20 durch einen nicht gezeigten Zapfwellenkupplungsschalter ausgelöst werden. In Schritt 102 werden die Messwerte des Drehzahlgebers 32 und eines Fahrzeuggeschwindigkeitssensors 36 erfasst. Der Fahrgeschwindigkeitssensor 36 ist an geeigneter Stelle im Antriebsstrang 18 angeordnet und gibt Signale aus, die proportional zur Fahrgeschwindigkeit des Fahrzeugs sind.

Schritt 104 prüft, ob die Fahrgeschwindigkeit einen vorgebbaren Grenzwert, beispielsweise 2 km/h, überschritten hat. Wenn dies nicht der Fall ist, wird der Algorithmus zu Schritt 102 zurückgeführt. Liegt die Fahrgeschwindigkeit über dem Grenzwert, so schreitet der Algorithmus zu den Schritten 106, 108 und 110 weiter.

In Schritt 106 wird die Zapfwellendrehzahl oder die Periodendauer der Drehgeberimpulse berechnet. Die Ergebnisse werden in Schritt 108 einer Frequenzanalyse unterworfen. In Schritt 110 wird die Amplitude der zweiten Oberwelle berechnet.

Schritt 112 vergleicht den Amplitudenwert der zweiten Oberwelle mit einem Schwellwert. Ist der Amplitudenwert kleiner als der Schwellwert, so wird in Schritt 114 festgestellt, dass kein an der Zapfwelle angeschlossenes Anbaugerät erkannt wurde. Andernfalls stellt Schritt 116 fest, dass ein Anbaugerät erkannt wurde.

Von den Schritten 114 und 116 schreitet der Algorithmus zu Schritt 118 weiter, durch den eine entsprechende Ausgabe an die Motorsteuerung 12 vorgenommen wird, um bei angeschlossenem Anbaugerät die maximal zulässige Motorleistung anzuheben, oder bei fehlendem Anbaugerät die Motorleistung auf ihren nominalen Maximalwert zu begrenzen. Der Algorithmus wird dann wieder zu Schritt 102 zurückgeführt.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Mess- und Auswerteeinrichtung zur Erfassung und Auswertung der Drehbewegung des Nebenantriebs (24) eines Arbeitsfahrzeugs mit einem Nebenantriebssensor (32) zur Erfassung der Nebenantriebsdrehbewegung, **dadurch gekennzeichnet, dass** die Auswerteeinrichtung (34) Mittel aufweist, welche die Amplitude der zweiten Harmonischen des vom Nebenantriebssensor (32) erzeugten Sensorsignals ermittelt und bei Überschreiten und/oder Unterschreiten eines vorgebbaren Schwellwertes entsprechende Steuersignale ausgibt.

2. Mess- und Auswerteeinrichtung nach Anspruch 1, **dadurch gekennzeichnet, dass** Mittel vorgesehen sind, die die Drehgeschwindigkeit des Nebenantriebs (24) oder die Zeitdauern zwischen aufeinanderfolgenden Abtastimpulsen erfassen und aus den Drehgeschwindigkeitsänderungen oder aus Änderungen der Zeitdauern die Amplitude derjenigen Schwankungsdrehzahl berechnet, welche die doppelte Frequenz wie die Nebenantriebsgrunddrehzahl aufweist.

3. Mess- und Auswerteeinrichtung nach Anspruch 1 oder 2, **dadurch gekennzeichnet, dass** ein Schmalbandfilter verwendet wird, um aus dem Sensorsignal die zweite Harmonische herauszufiltern.

4. Mess- und Auswerteeinrichtung nach einem der Ansprüche 1 bis 3, **dadurch gekennzeichnet, dass** zur Ermittlung der zweiten Harmonischen eine Fourier-Analyse anwendbar ist.

5. Mess- und Auswerteeinrichtung nach einem der Ansprüche 1 bis 4, **dadurch gekennzeichnet, dass** bei Überschreiten des Schwellwertes ein Signal ausgebbar ist, das anzeigt, dass ein Arbeitsgerät oder -aggregat an den Nebenantrieb (24) angeschlossen ist.

6. Mess- und Auswerteeinrichtung nach einem der Ansprüche 1 bis 5, **dadurch gekennzeichnet, dass** die Auswerteeinrichtung (34) Mittel aufweist, die bei Überschreiten des vorgebbaren Schwellwertes Steuersignale an eine Fahrzeugantriebsmotorsteuerung (12) abgeben, welche eine Erhöhung der maximalen Motorleistung bewirken.

7. Mess- und Auswerteeinrichtung nach Anspruch 6, **dadurch gekennzeichnet, dass** Mittel zur Überwachung der Antriebsstrangdrehzahl oder der Fahrzeuggeschwindigkeit vorgesehen sind und dass eine Erhöhung der maximalen Motorleistung nur dann erfolgt, wenn eine Mindestdrehzahl oder eine Mindestfahrzeuggeschwindigkeit überschritten wird.

8. Arbeitsfahrzeug mit einem Antriebsmotor (10), einem Getriebe für den Fahrantrieb und mindestens einem Nebenantrieb (24), an den wahlweise ein Arbeitsgerät oder -aggregat anschließbar ist, wobei die Leistung des Antriebsmotors (10) zu einem ersten Teil auf den Fahrantrieb und zu einem zweiten Teil auf die Nebenantriebe verzweigt wird und wobei wenigstens ein Nebenantriebssensor (32) zur Überwachung der Drehbewegung des Nebenantriebs (24) vorgesehen ist, **dadurch gekennzeichnet, dass** eine Auswerteeinrichtung (34) gemäß eines der Ansprüche 1 bis 6 vorgesehen ist.

9. Arbeitsfahrzeug nach Anspruch 8, **dadurch gekennzeichnet, dass** wenigstens ein Nebenantrieb eine Zapfwelle (24) enthält, an die ein Arbeitsgerät anschließbar ist.

10. Arbeitsfahrzeug nach Anspruch 8 oder 9, **dadurch gekennzeichnet, dass** das Arbeitsgerät über ein Kreuzgelenk (25) an den Nebenantrieb anschließbar ist.

## Claims

1. Measuring and evaluating device for detecting and evaluating the rotational movement of the auxiliary drive (24) of a utility vehicle comprising an auxiliary drive sensor (32) for detecting the rotational movement of the auxiliary drive, **characterized in that** the evaluating device (34) has means which determine the amplitude of the second harmonic of the sensor signal generated by the auxiliary drive sensor (32) and, when a predeterminable threshold value is exceeded or dropped below, emit corresponding control signals.

2. Measuring and evaluating device according to Claim 1, **characterized in that** means are provided which detect the rotational speed of the auxiliary drive (24) or the periods of time between successive sampling pulses and calculate from the changes in rotational speed or from the changes in the time periods the amplitude of that variational rotational speed which has twice the frequency of the basic rotational speed of the auxiliary drive.

3. Measuring and evaluating device according to either Claim 1 or Claim 2, **characterized in that** a narrowband filter is used to filter the second harmonic out of the sensor signal.

4. Measuring and evaluating device according to any one of Claims 1 to 3, **characterized in that** a Fourier analysis can be used for determining the second harmonic.

5. Measuring and evaluating device according to any one of Claims 1 to 4, **characterized in that**, when the threshold value is exceeded, a signal can be emitted which indicates that an implement or assembly of appliances is connected to the auxiliary drive (24).

6. Measuring and evaluating device according to any one of Claims 1 to 5, **characterized in that** the evaluating device (34) has means which, when the predeterminable threshold value is exceeded, emit to a vehicle drive engine controller (12) control signals which increase the maximum engine power.

7. Measuring and evaluating device according to Claim 6, **characterized in that** means are provided for monitoring the rotational speed of the drive train or the vehicle speed and **in that** the maximum engine power is increased only if a minimum rotational speed or a minimum vehicle speed is exceeded.

8. Utility vehicle comprising a drive engine (10), a gearbox for the travel drive and at least one auxiliary drive (24) to which an implement or assembly of appliances can be selectively connected, the power of the drive engine (10) being branched firstly to the travel drive and secondly to the auxiliary drives and at least one auxiliary drive sensor (32) being provided for monitoring the rotational movement of the auxiliary drive (24), **characterized in that** an evaluating device (34) according to any one of Claims 1 to 6 is provided.

9. Utility vehicle according to Claim 8, **characterized in that** at least one auxiliary drive contains a power take-off shaft (24) to which an implement can be connected.

10. Utility vehicle according to either Claim 8 or Claim 9, **characterized in that** the implement can be connected to the auxiliary drive via a universal joint (25).

## Revendications

1. Dispositif de mesure et d'analyse destiné à détecter et à analyser le mouvement de rotation du système d'entraînement auxiliaire (24) d'un véhicule de travail, comportant un capteur d'entraînement auxiliaire (32), destiné à détecter le mouvement de rotation du système d'entraînement auxiliaire, **caractérisé en ce que** le dispositif d'analyse (34) comporte des moyens qui déterminent l'amplitude de la deuxième harmonique du signal délivré par le capteur d'entraînement auxiliaire (32) et émettent des signaux de commande correspondants lorsque l'amplitude est supérieure ou inférieure à une valeur seuil prédéfinissable.

2. Dispositif de mesure et d'analyse selon la revendication 1, **caractérisé en ce qu'**il est prévu des moyens qui détectent la vitesse de rotation du système d'entraînement auxiliaire (24) ou les durées entre des impulsions d'exploration consécutives et, à partir des variations de la vitesse de rotation ou à partir des variations des durées, calculent l'amplitude de la vitesse de rotation de variation qui a une fréquence égale au double de celle de la vitesse de rotation de base du système d'entraînement auxiliaire.

3. Dispositif de mesure et d'analyse selon la revendication 1 ou 2, **caractérisé en ce qu'**un filtre à bande étroite est utilisé pour filtrer la deuxième harmonique hors du signal du capteur.

4. Dispositif de mesure et d'analyse selon l'une quelconque des revendications 1 à 3, **caractérisé en ce qu'**une analyse de Fourier peut être appliquée pour déterminer la deuxième harmonique.

5. Dispositif de mesure et d'analyse selon l'une quelconque des revendications 1 à 4, **caractérisé en ce qu'**en cas de dépassement de la valeur seuil, il peut être délivré un signal qui indique qu'une machine ou un organe de travail est raccordé au système d'entraînement auxiliaire (24).

6. Dispositif de mesure et d'analyse selon l'une quelconque des revendications 1 à 5, **caractérisé en ce que** l'unité d'analyse (34) comporte des moyens qui, en cas de dépassement de la valeur seuil prédéfinissable, émettent vers une commande du moteur d'entraînement du véhicule (12) des signaux de commande qui induisent une augmentation de la puissance maximale du moteur.

7. Dispositif de mesure et d'analyse selon la revendication 6, **caractérisé en ce qu'**il est prévu des moyens destinés à contrôler la vitesse de rotation de la ligne de transmission et **en ce qu'**une augmentation de la puissance maximale du moteur ne se produit que si une vitesse de rotation minimale ou une vitesse de déplacement minimale est dépassée.

8. Véhicule de travail comportant un moteur d'entraînement (10), un engrenage pour l'entraînement du véhicule et au moins un système d'entraînement auxiliaire (24) auquel peut être raccordé une machine ou un organe de travail, la puissance du moteur d'entraînement (10) étant dérivée en une première partie sur l'entraînement du véhicule et en une deuxième partie sur les systèmes d'entraînement auxiliaires et au moins un capteur d'entraînement auxiliaire (32) étant prévu pour contrôler le mouvement de rotation du système d'entraînement auxiliaire (24), **caractérisé en ce qu'**il est prévu un dispositif d'analyse (34) selon une des revendications 1 à 6.

9. Véhicule de travail selon la revendication 8, **caractérisé en ce qu'**au moins un système d'entraînement auxiliaire comporte un arbre de prise de force (24) auquel peut être raccordée une machine de travail.

10. Véhicule de travail selon la revendication 8 ou 9, **caractérisé en ce que** la machine de travail peut être raccordée au système d'entraînement auxiliaire par l'intermédiaire d'un joint de Cardan (25).
